(19)

Europäisches
Patentamt
European
Patent Office
Office européen
des brevets

(11) **EP 3 825 896 A1**

(12) **EUROPEAN PATENT APPLICATION**
published in accordance with Art. 153(4) EPC

(43) Date of publication:
**26.05.2021  Bulletin 2021/21**

(21) Application number: **18927155.4**

(22) Date of filing: **19.07.2018**

(51) Int Cl.:
***G06F 40/40*** (2020.01)

(86) International application number:
**PCT/JP2018/027173**

(87) International publication number:
**WO 2020/017006 (23.01.2020 Gazette 2020/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **FUJITSU LIMITED
Kanagawa 211-8588 (JP)**

(72) Inventors:
- **KATAOKA, Masahiro
  Kawasaki-shi, Kanagawa 211-8588 (JP)**
- **MATOBA, Yuki
  Kawasaki-shi, Kanagawa 211-8588 (JP)**
- **INOUE, Sakae
  Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **LEARNING METHOD, TRANSLATION METHOD, LEARNING PROGRAM, TRANSLATION PROGRAM, AND INFORMATION PROCESSING DEVICE**

(57)    An information processing apparatus (100) analyzes first text information and second identification information and acquires, regarding words included in the first and the second text information, first word information and second word information each of which identifies a combination of a word and a word meaning of the word. The information processing apparatus (100) converts the first word information to a first word meaning vector and converts the second word information to a second word meaning vector. The information processing apparatus (100) learns parameters of a conversion model by using the first word meaning vector and the second word meaning vector.

FIG.3

**Description**

[Technical Field]

The present invention relates a learning method, and the like.

[Background Art]

In recent years, when a first language is translated into a second language that is different from the first language, neural machine translation (NMT) is used. Various models are present in neural machine translation and, for example, there is a model constructed from an encoder, a recurrent neural network (RNN), and a decoder (decoder).

The encoder is a processing unit that encodes a character string of an input sentence into words and assigns vector to the words. The RNN converts the words that are input from the encoder and the vectors thereof based on the own parameter and outputs the converted vectors and the words. The decoder is a processing unit that decodes an output sentence based on the vectors and the words that are output from the RNN.

In the related technology, parameters of the RNN are learned by using teacher data such that an appropriate output sentence written in the second language is output from an input sentence written in the first language. In the parameters of the RNN, bias values and weights of an activation function are included. For example, in the related technology, parameters of the RNN are learned by providing a combination of an input sentence "Ringo ha amai." written in the first language and an output sentence "The apple is sweet." written in the second language as learning data.

[Citation List]

[Patent Citation]

Patent Document 1: Japanese Laid-open Patent Publication No. 2013-020431
Patent Document 2: Japanese Laid-open Patent Publication No. 2018-026098

[Summary of Invention]

[Technical Problem]

However, in the related technology described above, there is a problem in that translation accuracy of words each including a plurality of word meanings is low.

In the encoder used for neural machine translation, an operation of converting each word included in the input sentence to vectors formed from hundreds of dimensions called distributed representation is performed. This operation is called "embedding" in order to reduce dependence on languages, such as the English language, the Japanese language, and the like. In the related technology, when embedding is performed, word meanings of words are not distinguished. For example, word meanings are different between "amai (1)" used in "Ringo ha amai." and "amai (2)" used in "Kimi no kangae ha amai."; however, in the embedding technique used in the related technology, "amai (1)" and "amai (2)" are converted to a single piece of the same vector by Word2Vec. Consequently, in the related technology, RNN machine learning is performed without distinguishing a difference between the word meanings of "amai (1)" and "amai (2)"; therefore, it is difficult to appropriately learn parameters with respect to words each including a plurality of word meanings. Thus, when words each including a plurality of word meanings are present in an input sentence, an output sentence is not appropriately translated, and therefore, the translation accuracy is reduced.

Accordingly, it is an object in one aspect of an embodiment of the present invention to provide a learning method, a translation method, a learning program, a translation program, and an information processing apparatus that enable to improve translation accuracy of words each including a plurality of word meanings.

[Solution to Problem]

In one proposal, a computer performs following processing. The computer receives first text information and second text information. The computer acquires, by analyzing the received first text information, first word information that identifies a combination of one of words included in the first text information and a word meaning of the one of the words. The computer acquires, by analyzing the received second text information, second word information that identifies a combination of one of words included in the second text information and a word meaning of the one of the words. The computer specifies, by referring to a storage unit in which word meaning vectors associated with corresponding word meanings of words are stored in association with word information that identifies combinations of the words and the word meanings of the words, a first word meaning vector associated with the first word information and a second word meaning vector associated with the second word information. The computer learns parameters of a conversion model such that a word meaning vector that is output when the first word meaning vector specified from the first word information on a first word included in the first text information is input to the conversion model approaches the second word meaning vector specified from a second word that indicates a word that is associated with the first word and that is included in the second text information.

[Advantageous Effects of Invention]

It is possible to improve translation accuracy of words each including a plurality of word meanings.

[Brief Description of Drawings]

FIG. 1 is a diagram illustrating a process performed by an information processing apparatus according to a first embodiment.
FIG. 2 is a diagram illustrating a process performed when the information processing apparatus according to the first embodiment learns parameters that are set in an RNN.
FIG. 3 is a functional block diagram illustrating a configuration of the information processing apparatus according to the first embodiment.
FIG. 4 is a diagram illustrating an example of a data structure of a first vector table according to the first embodiment.
FIG. 5 is a diagram illustrating an example of a data structure of a second vector table according to the first embodiment.
FIG. 6 is a diagram illustrating an example of a data structure of a teacher data table according to the first embodiment.
FIG. 7 is a diagram illustrating an example of a data structure of a code conversion table according to the first embodiment.
FIG. 8 is a diagram illustrating an example of a data structure of dictionary information according to the first embodiment.
FIG. 9 is a diagram illustrating an example of a data structure of RNN data according to the first embodiment.
FIG. 10 is a diagram providing a supplementary explanation of parameters of an intermediate layer.
FIG. 11 is a flowchart illustrating the flow of a process performed by the information processing apparatus according to the first embodiment.
FIG. 12 is a functional block diagram illustrating an information processing apparatus according to a second embodiment.
FIG. 13 is a flowchart illustrating the flow of a process performed by the information processing apparatus according to the second embodiment.
FIG. 14 is a diagram illustrating an example of a hardware configuration of a computer that implements the same function as that of the information processing apparatus according to the first embodiment.
FIG. 15 is a diagram illustrating an example of a hardware configuration of a computer that implements the same function as that of the information processing apparatus according to the second embodiment.

[Embodiments for Carrying Out the Invention]

Preferred embodiment of a learning method, a translation method, a learning program, a translation program, and an information processing apparatus disclosed in the present invention will be explained in detail below with reference to the accompanying drawings. Furthermore, the present invention is not limited to the embodiments.

First Embodiment

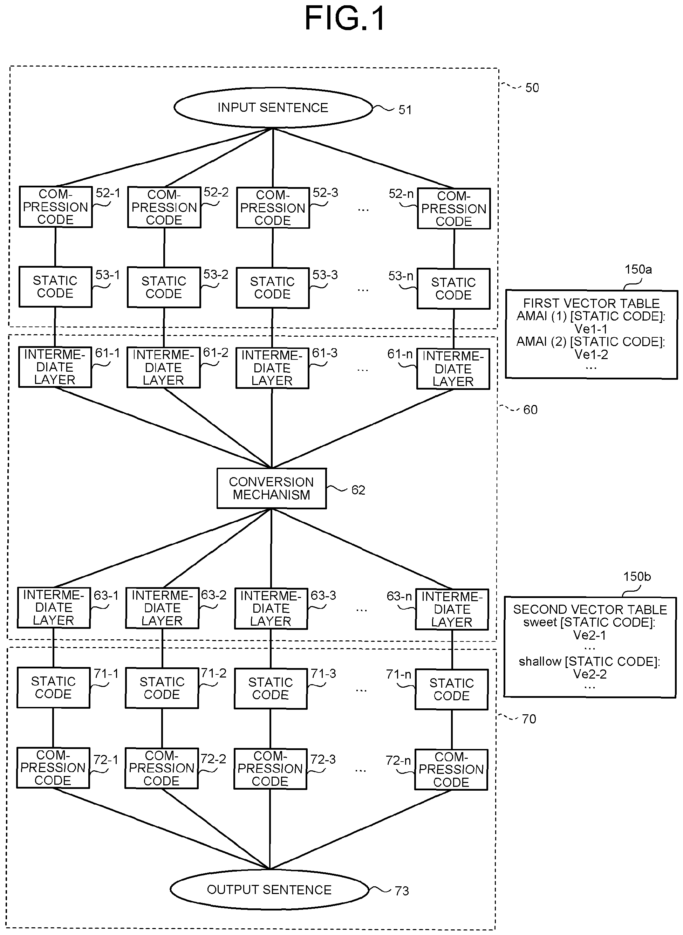

FIG. 1 is a diagram illustrating a process performed by an information processing apparatus according to the first embodiment. The information processing apparatus according to the first embodiment includes an encoder 50, a recurrent neural network (RNN) 60, and a decoder 70. When an input sentence written in the first language is input to the encoder 50, an output sentence written in the second language is output from the decoder 70 via the RNN 60. In the first embodiment, a description will be given with the assumption that the first language is the Japanese language, and the second language is the English language; however, the languages are not limited to these languages.

The encoder 50 is a processing unit that divides the input sentence into words constituting the input sentence and that converts each of the words to corresponding first vectors. The RNN 60 is a processing unit that converts, when a plurality of first vectors are input, the plurality of first vectors to second vectors by using parameters that are set in the RNN 60. In the parameters that are set in the RNN 60, bias values and weights of an activation function are included. The decoder 70 is a processing unit that decodes the output sentence based on each of the words associated with the second vectors output from the RNN 60.

The encoder 50 uses a code conversion table (not illustrated) for the first language and converts the plurality of words included in an input sentence 51 to compression codes that can uniquely identify the words and the word meanings of the words. For example, each of the words included in the input sentence 51 is converted to one of associated compression codes 51-1 to 51-n. Here, regarding "amai (1)" used in "Ringo ha amai." and "amai (2)" used in "Kimi no kangae ha amai.", the word meanings are different; therefore, "amai (1)" and "amai (2)" are converted to different compression codes.

The encoder 50 converts, based on dictionary information (not illustrated) on the first language, the compression codes 51-1 to 51-n to static codes 53-1 to 53-n because words each including a plurality of word meanings are high-frequency words. Furthermore, low-frequency words are converted to dynamic codes (not illustrated). The dictionary information is information in which compression codes are associated with static codes or dynamic codes of the first language.

Here, the static codes 53-1 to 53-n generated by the encoder 50 is information associated with local representation. The encoder 50 refers to a first vector table 150a and converts each of the static codes to the associated first vectors. The first vector table 150a is a table for associating static codes with the first vectors. The first vectors are information associated with distributed representation. The encoder 50 outputs each of the converted first vectors to the RNN 60.

The RNN 60 includes intermediate layers (hidden layers) 61-1 to 61-n and 63-1 to 63-n and a conversion mechanism 62. Each of the intermediate layers 61-1 to 61-n and 63-1 to 63-n calculates a value based on its own set parameter and based on an input vector and then outputs the calculated value.

The intermediate layer 61-1 receives an input of the first vector of the static code 53-1, calculates a value based on the received vector and its own set parameter, and outputs the calculated value to the conversion mechanism 62. Similarly, each of the intermediate layers 61-2 to 61-n also receives an input of the first vectors associated with the static code, calculates a value based on the received vector and its own set parameter, and outputs the calculated value to the conversion mechanism 62.

The conversion mechanism 62 takes a role in judging, by using each of the values input from the associated intermediate layers 61-1 to 61-n and the internal state of the decoder 70 or the like as a basis for judgement, a portion to pay attention when a next word is translated. For example, the state is normalized such that a value of 1 is obtained when all of the probabilities are added, such as the probability of focusing attention on the value of the intermediate layer 61-1 being set to 0.2, the probability of focusing attention on the intermediate layer 61-2 being set to 0.3, and the like.

The conversion mechanism 62 calculates a weighted sum of the distributed representation by summing values obtained by multiplying the value output from each of the intermediate layers 61-1 to 61-n by each of attention (probabilities). This is called a context vector. The conversion mechanism 63 inputs the context vector to the intermediate layers 63-1 to 63-n. Each of the probabilities that are used to calculate each of the context vectors that are input to the intermediate layers 63-1 to 63-n is re-calculated and the portion to be focused on varies each time.

The intermediate layer 63-1 receives the context vector from the conversion mechanism 62, calculates a value based on the received context vector and its own set parameter, and outputs the calculated value to the decoder 70. Similarly, each of the intermediate layers 63-2 to 63-n also receives the associated context vector, calculates a value based on the received vector and its own set parameter, and outputs the calculated value to the decoder 70.

The decoder 70 refers to a second vector table 150b regarding the values (the second vectors) output from the intermediate layers 63-1 to 63-n and converts the second vectors to the static codes 71-1 to 71-n. The second vector table 150b is a table that associates the static codes with the second vectors. The second vector is information associated with distributed representation.

The decoder 70 converts the static codes 71-1 to 71-n to the compression codes 72-1 to 72-n, respectively, based on the dictionary information (not illustrated) on the second language. The dictionary information on the second language is information in which the compression codes are associated with the static codes of the second language.

The decoder 70 generates an output sentence 73 by converting the compression codes 72-1 to 72-n to the words written in the second language by using the code conversion table (not illustrated) of the second language.

Here, when the information processing apparatus according to the first embodiment learns the parameters that are set in the RNN 60, the information processing apparatus receives a combination of an input sentence written in the first language and an output sentence written in the second language that become teacher data. The information processing apparatus learns the parameters that are set in the RNN 60 such that, when the input sentence of the teacher data is input to the encoder 50, the output sentence of the teacher data is output to the decoder 70.

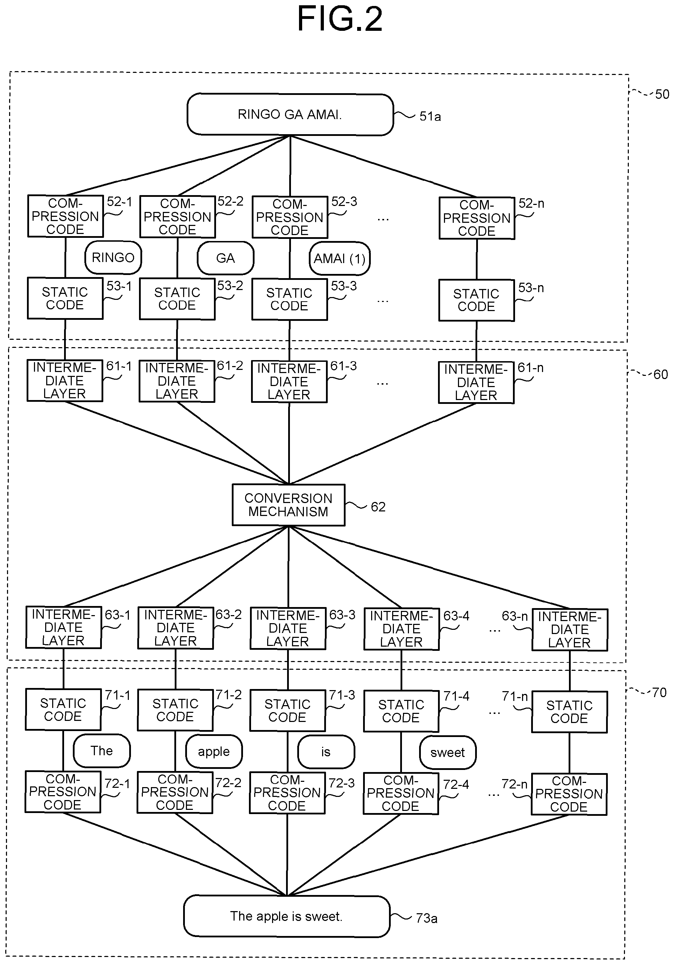

FIG. 2 is a diagram illustrating a process when the information processing apparatus according to the first embodiment learns the parameters that are set in the RNN. In the example illustrated in FIG. 2, as the teacher data, the input sentence of "Ringo ga amai." and an output sentence of "The apple is sweet." are used.

The information processing apparatus performs a process described below based on the input sentence of "Ringo ga amai." of the teacher data and calculates each of the first vectors that are input to the corresponding intermediate layers 61-1 to 61-n in the RNN 60.

The information processing apparatus converts the word "ringo" in an input sentence 51a to a compression code 52-1 and convers the compression code 52-1 to the static code 53-1. The information processing apparatus specifies the first vector of "ringo" based on the static code 53-1 of "ringo" and the first vector table 150a and sets the specified result to the first vector that is input to the intermediate layer 61-1.

The information processing apparatus converts the word "is" in the input sentence 51a to a compression code 52-2 and converts the compression code 52-2 to the static code 53-2. The information processing apparatus specifies the first vector of "is" based on the static code 53-2 of "is" and the first vector table 150a and sets the specified result to the first vector that is input to the intermediate layer 61-2.

The information processing apparatus converts the word "amai (1)" in the input sentence 51a to a compression code 52-3. Here, "amai (1)" expediently indicates the word "amai" representing the word meaning "taste like sugar or honey". The compression code 52-3 converted by the information processing apparatus functions as a compression code that uniquely identifies a combination of the word "amai" and the meaning of this word "amai". The information processing apparatus converts the compression code 52-3 to the static code 53-3. The information processing apparatus specifies the first vector of "amai (1)" based on the static code 53-2 of "amai (1)" and the first vector table 150a and sets the specified result to the first input vector that is input to the intermediate layer 61-3.

Subsequently, the information processing apparatus performs the process described below based on an output sentence "The apple is sweet." of the teacher data and calculates an "optimum second vector" that is output from each of the intermediate layers 63-1 to 63-n in the RNN 60.

The information processing apparatus converts the word "The" in the output sentence 73a to the compression code 72-1 and converts the compression code 72-1 to the static code 71-1. The information processing apparatus specifies the second vector of "The" based on the static code 71-1 of "The" and the second vector table 150b and sets the specified second vector to an ideal value of the second vector that is output from the intermediate layer 63-1.

The information processing apparatus converts the word "apple" in the output sentence 73a to the compression code 72-2 and converts the compression code 72-2 to the static code 71-2. The information processing apparatus specifies the second vector of "apple" based on the static code 71-2 of "apple" and the second vector table 150b and sets the specified second vector to an ideal value of the second vector that is output from the intermediate layer 63-2.

The information processing apparatus converts the word "is" in the output sentence 73a to the compression code 72-3 and converts the compression code 72-3 to the static code 71-3. The information processing apparatus specifies the second vector of "is" based on the static code 71-3 of "is" and the second vector table 150b and sets the specified second vector to an ideal value of the second vector that is output from the intermediate layer 63-3.

The information processing apparatus converts the word "sweet" in the output sentence 73a to the compression code 72-4 and converts the compression code 72-4 to the static code 71-4. The information processing apparatus specifies the second vector of "sweet" based on the static code 71-4 of "sweet" and the second vector table 150b and sets the specified second vector to an ideal value of the second vector that is output from the intermediate layer 63-4.

As described above, the information processing apparatus uses the teacher data and specifies each of the first vectors that are input to the corresponding intermediate layers 61-1 to 61-n in the RNN 60 and the ideal second vectors that are output from the corresponding intermediate layers 63-1 to 63-n in the RNN 60. By inputting each of the specified first vectors to the corresponding intermediate layers 61-1 to 61-n included in the RNN 60, the information processing apparatus performs a process of adjusting the parameters that are set in the RNN 60 such that the second vectors that are output from the corresponding intermediate layers 63-1 to 63-n approach the ideal second vectors.

Here, when the information processing apparatus according to the first embodiment learns the parameters of the RNN 60 by using the teacher data, regarding the words included in the teacher data, the information processing apparatus performs learning by using the compression codes and the static codes that uniquely identify a combination of words and the word meanings of the words. Consequently, regarding the first vectors (distributed representation) that are input to the RNN 60, because learning is performed in a state in which the word meanings of the words can be distinguished, it is possible to improve the translation accuracy of the words each including a plurality of word meanings by using the RNN 60 in which the learning described above is performed.

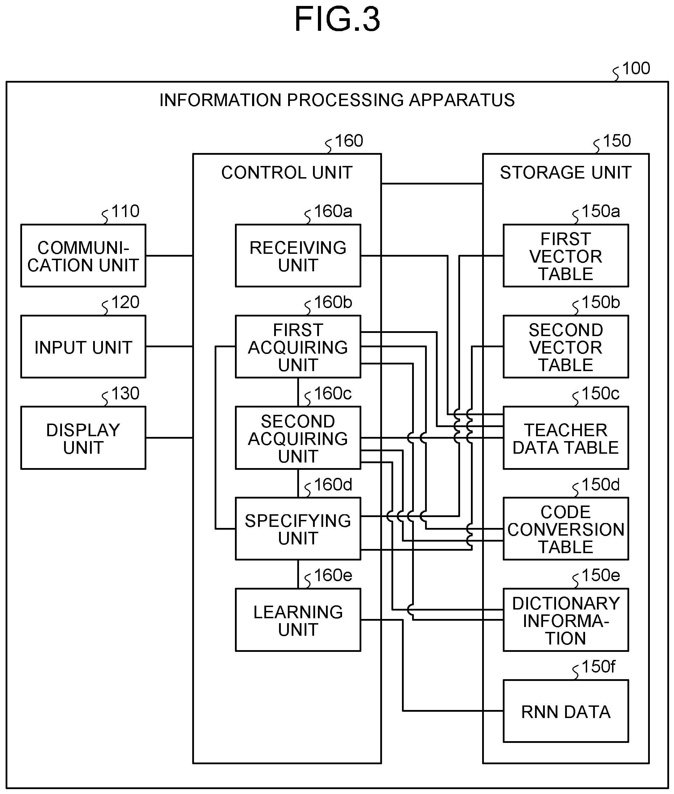

In the following, a configuration of the information processing apparatus according to the first embodiment will be described. FIG. 3 is a functional block diagram illustrating a configuration of the information processing apparatus according to the first embodiment. As illustrated in FIG. 3, an information processing apparatus 100 includes a communication unit 110, an input unit 120, a display unit 130, a storage unit 150, and a control unit 160.

The communication unit 110 is a processing unit that performs data communication with an external device via a network. The communication unit 110 is an example of a communication device. For example, the information processing apparatus 100 may also be connected to an external device via a network and receives a teacher data table 150c or the like from an external device.

The input unit 120 is an input device for inputting various kinds of information to the information processing apparatus 100. For example, the input unit 120 corresponds to a keyboard, a mouse, a touch panel, or the like.

The display unit 130 is a display device for displaying various kinds of information output from the control unit 160. For example, the display unit 130 corresponds to a liquid crystal display, a touch panel, or the like.

The storage unit 150 includes the first vector table 150a, the second vector table 150b, the teacher data table 150c, a code conversion table 150d, dictionary information 150e, and RNN data 150f. The storage unit 150 corresponds to a semiconductor memory device, such as a random access memory (RAM), a read only memory (ROM), and a flash memory, or a storage device, such as a hard disk drive (HDD).

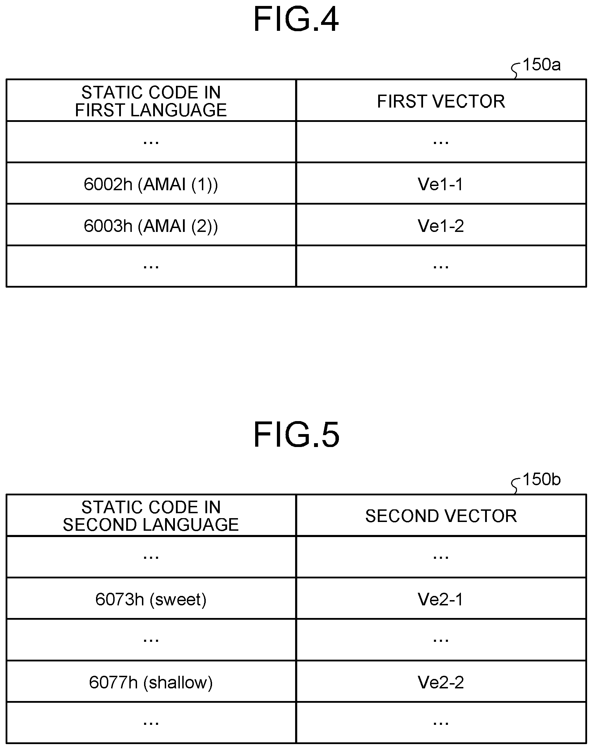

The first vector table 150a is a table that associates the static codes of the first language with the first vectors. The first vector is an example of a word meaning vector. FIG. 4 is a diagram illustrating an example of the data structure of the first vector table according to the first embodiment. As illustrated in FIG. 4, the first vector table 150a associates the static codes of the first language with the first vectors. For example, a static code "6002h" associated with the word "amai (1)" written in the first language is associated with the first vector "Ve1-1". The symbol "h" indicates hexadecimal numbers. The first vector is information corresponding to distributed representation.

The second vector table 150b is a table that associates the static codes of the second language with the second vectors. The second vector is an example of a word meaning vector. FIG. 5 is a diagram illustrating the data structure of the second vector table according to the first embodiment. As illustrated in FIG. 5, the second vector table 150b associates the static codes of the second language with the second vector. For example, a static code "6073h" associated with the word "sweet" written in the second language is associated with the second vector "Ve2-1". The second vector is information corresponding to distributed representation.

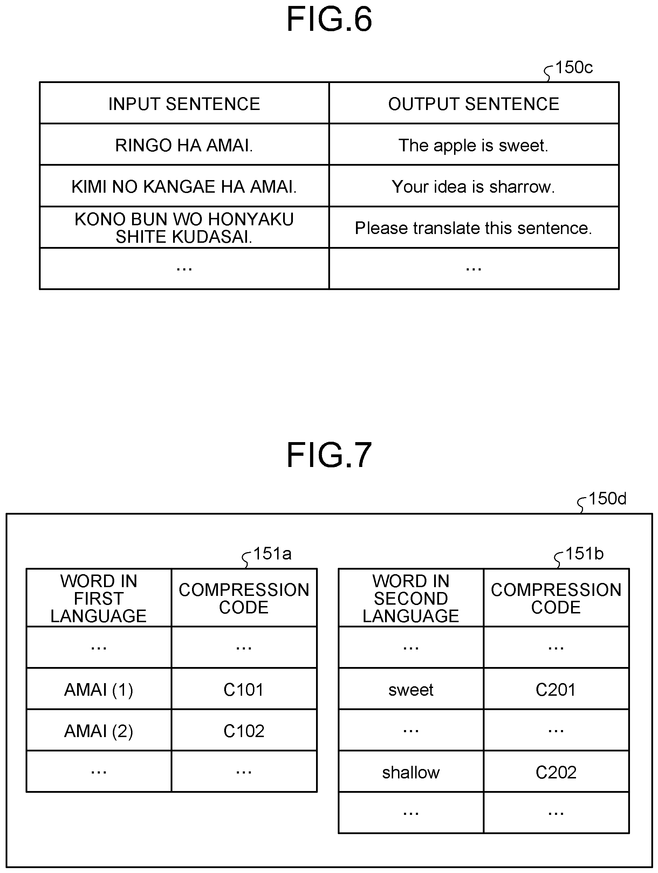

The teacher data table 150c is a table that holds a combination of input sentences and output sentences that function as teacher data. FIG. 6 is a diagram illustrating an example of the data structure of the teacher data table according to the first embodiment. As illustrated in FIG. 6, the teacher data table 150c associates the input sentences with the output sentences. For example, when the input sentence "Ringo ha amai." written in the first language is translated into the second language, an appropriate output sentence is "The apple is sweet.", which is indicated by the teacher data.

Although not illustrated in in FIG. 6, it is assumed that, when a polysemous word is included in each of the words included in an input sentence, information indicating the words associated with the polysemous words and the word meanings of the words are set in the teacher data table 150c. For example, it is assumed that, regarding the input sentence of "Ringo ha amai.", a flag indicating a polysemous word is set to "amai" and the word meaning "tastes like sugar or honey" is attached. Furthermore, it is assumed that, regarding the input sentence "Kimi no kangae ha amai.", a flag indicating a polysemous word is set to "amai" and the word meaning "steady mental preparedness is not yet ready." is attached. Furthermore, the word meaning attached to the polysemous word may also be information that uniquely identifies the word meaning.

The code conversion table 150d is a table that associates combinations of words and word vocabularies with compression codes. FIG. 7 is a diagram illustrating an example of the data structure of the code conversion table according to the first embodiment. As illustrated in FIG. 7, the code conversion table 150d includes a table 151a and a table 151b.

The table 151a associates the words with the compression codes written in the first language. For example, the word "amai (1)" is associated with a compression code "C101". Based on the compression code "C101", it is possible to uniquely identify a combination of the word "amai" and the word meaning "tastes like sugar or honey". The word "amai (2)" is associated with a compression code "C102". Based on the compression code "C102", it is possible to uniquely identify a combination of the word "amai" and the word meaning "steady mental preparedness is not yet ready". Furthermore, regarding the word that is not a polysemous word, a single compression code is assigned to a single word.

The table 151b associates the words with the compression codes written in the second language. For example, the word "Sweet" is associated with a compression code "C201". The word "shallow" is associated with a compression code "C202". Although a description will be omitted here, similarly to the compression codes in the table 151a, the compression codes in the table 151b may also be compression codes that uniquely identify a combination of the words and the word meanings.

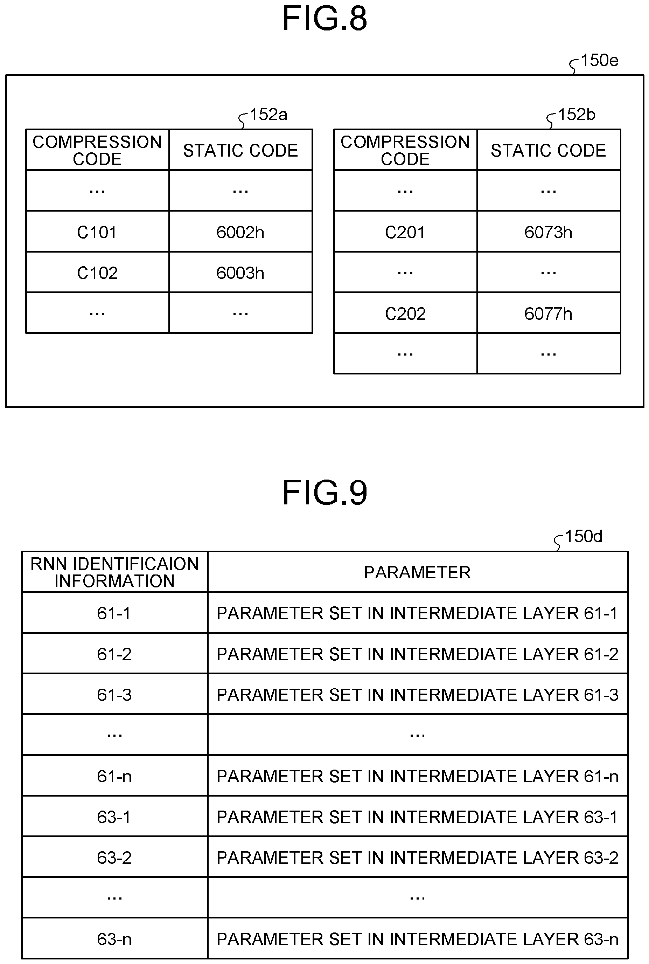

The dictionary information 150e is a table that associates the compression codes with the static codes. FIG. 8 is a diagram illustrating an example of the data structure of the dictionary information according to the first embodiment. As illustrated in FIG. 8, the dictionary information 150e includes a table 152a and a table 152b.

The table 152a is a table that associates the compression codes of the words written in the first language with the static codes. For example, the compression code "C101 (the compression code of amai (1))" is associated with the static code "6002h". The compression code "C101 (the compression code of amai (2))" is associated with a static code "6003h".

The table 152b is a table that associates the compression codes of the words written in the second language with the static codes. For example, the compression code "C201 (the compression code of sweet)" is associated with a static code "6073h". The compression code "C202 (the compression code of shallow)" is associated with a static code "6077h".

The RNN data 150f is a table that holds a parameter or the like that is set in each of the intermediate layers in the RNN 60 described in FIGS. 1 and 2. FIG. 9 is a diagram illustrating an example of the data structure of the RNN data according to the first embodiment. As illustrated in FIG. 9, the RNN data 150f associates RNN identification information with parameters. The RNN identification information is information that uniquely identify the intermediate layer in the RNN 60. The parameters indicate the parameters that are set in the associated intermediate layers. The parameters each correspond to a bias value or a weight that are used in an activation function and that are set in the intermediate layers.

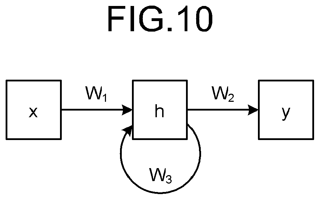

FIG. 10 is a diagram providing a supplementary explanation of parameters of an intermediate layer. FIG. 10 illustrates an input layer "x", an intermediate layer (hidden layer) "h", and an output layer "y". The intermediate layer "h" corresponds to the intermediate layers 61-1 to 61-n and 63-1 to 63-n illustrated in FIG. 1.

The relationship between the intermediate layer "h" and the input layer "x" is defined by Equation (1) by using an activation function f, where $W_1$ and $W_3$ in Equation (1) denote weights that are adjusted to optimum values based on learning performed by the teacher data and t denotes time (how many words are read).

$$h_t = f\left(W_1 x_t + W_3 h_{t-1}\right) \tag{1}$$

The relationship between the intermediate layer "h" and the output layer "y" is defined by Equation (2) by using an activation function g, where W2 in Equation (2) denotes a weight that is adjusted to an optimum value based on learning performed by the teacher data. Furthermore, a softmax function may also be used as the activation function g.

$$y_t = g\left(W_2 h_t\right) \tag{2}$$

A description will be given here by referring back to FIG. 3. The control unit 160 includes a receiving unit 160a, a first acquiring unit 160b, a second acquiring unit 160c, a specifying unit 160d, and a learning unit 160e. The control unit 160 can be implemented by a central processing unit (CPU), a micro processing unit (MPU), or the like. Furthermore, the control unit 160 may also be implemented by hard-wired logic, such as an application specific integrated circuit (ASIC) or a field programmable gate array (FPGA). Furthermore, it is assumed that the processes performed by the encoder 50, the RNN 60, and the decoder 70 are implemented by the control unit 160.

The receiving unit 160a is a processing unit that receives the teacher data table 150c from an external device via the network. The receiving unit 160a stores the received teacher data table 150c in the storage unit 150. The receiving unit 160a may also receive the teacher data table 150c from the input unit 120.

The first acquiring unit 160b is a processing unit that analyzes an input sentence in the teacher data table 150c and that acquires a static code with respect to the word in the input sentence. In the following, an example of a process performed by the first acquiring unit 160b will be described.

The first acquiring unit 160b acquires an input sentence from the teacher data table 150c, performs a lexical analysis on the input sentence, and divides the input sentence into a plurality of words. The first acquiring unit 160b selects a divided word, compares the selected word with the table 151a in the code conversion table 150d, and converts the word to a compression code.

Here, when the selected word is a polysemous word, the first acquiring unit 160b specifies, from the table 151a, a compression code associated with the combination of the selected word and the word meaning and converts the selected word to the specified compression code. When the selected word is not a polysemous word, the first acquiring unit 160b specifies, from the table 151a, the compression code associated with the selected word and converts the selected word to the specified compression code.

When the first acquiring unit 160b converts the word in the input sentence to a compression code, the first acquiring unit 160b compares the converted compression code with the table 152a in the dictionary information 150e and specifies the static code associated with the compression code. The first acquiring unit 160b converts the compression code to a static code and outputs the converted static code to the specifying unit 160d. The static code that is output to the specifying unit 160d by the first acquiring unit 160b is referred to as a "first static code". The first static code corresponds to the first word information.

When the first acquiring unit 160b acquires an input sentence from the teacher data table 150c, the first acquiring unit 160b notifies the second acquiring unit 160c of the position of the acquired input sentence indicating the number of lines positioned in the input sentence.

The second acquiring unit 160c acquires an output sentence from the teacher data table 150c. It is assumed that the second acquiring unit 160c acquires the output sentence on the line notified from the first acquiring unit 160b from the teacher data table 150c. The second acquiring unit 160c performs the lexical analysis on the output sentence and divides the output sentence into a plurality of words. The second acquiring unit 160c selects the divided word, compares the selected word with the table 151b in the code conversion table 150d, and converts the selected word to a compression code.

When the selected word is a polysemous word, the second acquiring unit 160c specifies, from the table 151b, the compression code associated with a combination of the selected word and the word meaning and converts the selected word to the specified compression code. When the selected word is not a polysemous word, the second acquiring unit 160c specifies, from the table 151b, the compression code associated with the selected word and converts the selected word to the specified compression code.

When the second acquiring unit 160c converts the word included in the output sentence to a compression code, the second acquiring unit 160c compares the converted compression code with the table 152b in the dictionary information 150e and specifies a static code associated with the compression code. The second acquiring unit 160c converts the compression code to a static code and outputs the converted static code to the specifying unit 160d. The static code that is output to the specifying unit 160d by the second acquiring unit 160c is referred to as a "second static code". The second static code corresponds to second word information.

The specifying unit 160d compares the first static code with the first vector table 150a and specifies a first vector associated with the first static code. The first vector is an example of the first word meaning vector. The specifying unit 160d outputs a combination of each of the first vectors associated with the corresponding words included in the input sentence to the learning unit 160e.

The specifying unit 160d compares the second static code with the second vector table 150b and specifies a second vector associated with the second static code. The second vector is an example of the second word meaning vector. The specifying unit 160d outputs a combination of each of the second vectors associated with the corresponding words included in the output sentence to the learning unit 160e.

The learning unit 160e uses the parameter of each of the intermediate layers registered in the RNN data 150f, inputs each of the first vectors to the corresponding intermediate layers 61-1 to 61-n in the RNN 60, and calculates each of the vectors output from the intermediate layers 63-1 to 63-n. The learning unit 160e learns the parameter of each of the intermediate layers registered in the RNN data 150f such that each of the vectors output from the corresponding intermediate layers 63-1 to 63-n in the RNN 60 approaches the corresponding second vectors.

For example, the learning unit 160e may also perform learning by using a cost function in which a difference between each of the vectors output from the corresponding intermediate layers 63-1 to 63-n and the second vector is defined and adjusting the parameter of each of the intermediate layers so as to minimize the difference.

The first acquiring unit 160b, the second acquiring unit 160c, the specifying unit 160d, and the learning unit 160e learn the parameters of the RNN data 150f by changing the teacher data and repeatedly performing the process described above.

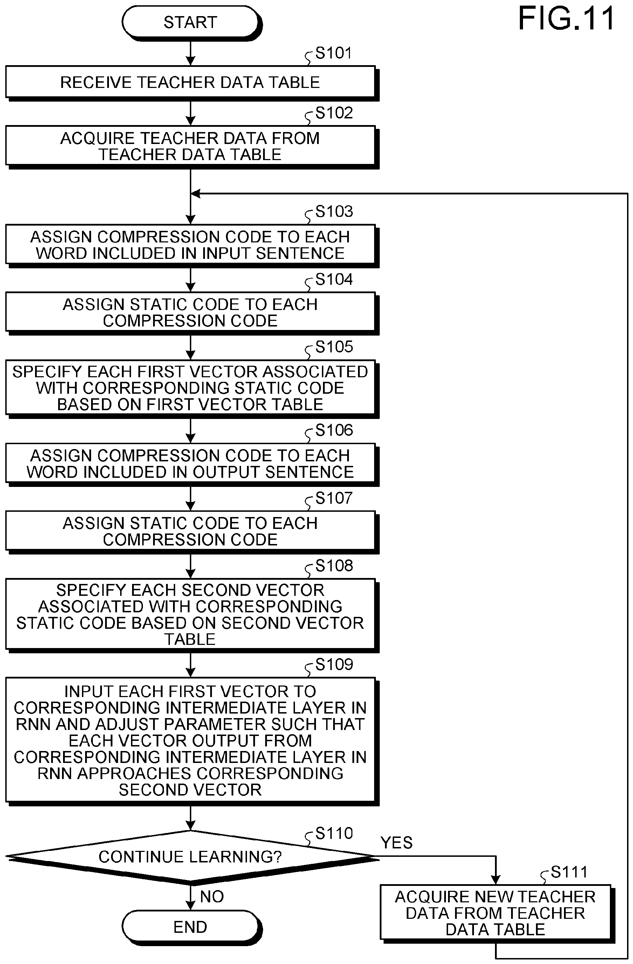

In the following, the flow of the process performed by the information processing apparatus 100 according to the first embodiment will be described. FIG. 11 is a flowchart illustrating the flow of the process performed by the information processing apparatus according to the first embodiment. As illustrated in FIG. 11, the receiving unit 160a included in the information processing apparatus 100 receives the teacher data table 150c (Step S101).

The first acquiring unit 160b and the second acquiring unit 160c included in the information processing apparatus 100 acquire the teacher data from the teacher data table 150c (Step S102). The first acquiring unit 160b assigns a compression code to each of the words included in the input sentence (Step S103). The first acquiring unit 160b assigns a static code to each of the compression codes (Step S104).

The specifying unit 160d in the information processing apparatus 100 specifies each of the first vectors with respect to the corresponding static codes based on the first vector table 150a (Step S105). The second acquiring unit 160c assigns a compression code to each of the words included in the output sentence (Step S106). The second acquiring unit 160c assigns a static code to each of the compression codes (Step S107). The specifying unit 160d specifies each of the second vectors with respect to the corresponding static codes based on the second vector table 150b (Step S108).

The learning unit 160e in the information processing apparatus 100 inputs each of the first vectors to the corresponding intermediate layers in the RNN 60 and adjusts the parameters such that each of the vectors output from the corresponding intermediate layers in the RNN 60 approaches the corresponding second vectors (Step S109).

The information processing apparatus 100 judges whether learning is to be continued (Step S110). When the learning is not continued (No at Step S110), the information processing apparatus 100 ends the learning. When the learning is continued (Yes at Step S110), the information processing apparatus 100 proceeds to Step S111. The first acquiring unit 160b and the second acquiring unit 160c acquire new teacher data from the teacher data table 150c (Step S111) and proceeds to Step S103.

In the following, the effects of the information processing apparatus 100 according to the first embodiment will be described. When the information processing apparatus 100 learns the parameters of the RNN 60 by using the teacher data, the information processing apparatus 100 performs the learning of the words included in the teacher data by using the compression codes and the static codes that uniquely identify combinations of the words and the word meanings of the words. Consequently, by inputting the first vector, it is possible to perform learning in which the vectors that are output from the RNN 60 conforms to the ideal second vectors in a state of discriminating the word meanings of the words and it is thus possible to improve the translation accuracy of the words that includes a plurality of word meanings by using the RNN 60 that has been subjected to such learning.

The information processing apparatus 100 according to the first embodiment converts the words included in the teacher data to the compression codes that uniquely indicate the combinations of the words and the word meanings of the words. For example, by receiving and sending the data in the control unit 160 (CPU) using the compression codes, when compared with a case of handling information on the words and the word meanings of the words without processing anything, it is possible to speed up data processing related to reading from and writing to the storage unit 150 (memory).

The information processing apparatus 100 according to the first embodiment converts the words included in the teacher data to the static codes that can uniquely identify the words and the meanings of the words. Consequently, it is possible to easily associate both of the word and the word meaning with a single vector.

Second Embodiment

An information processing apparatus according to a second embodiment will be described. The information processing apparatus according to the second embodiment performs a process of translating an input sentence into an output sentence by using the encoder 50, the RNN 60, and the decoder 70 that are described with reference to FIG. 1. Here, regarding the parameters that are set in the corresponding intermediate layers 61-1 to 61-n and 63-1 to 63-n in the RNN 60, the parameters that have been subjected to learning performed by the information processing apparatus 100 according to the first embodiment are used.

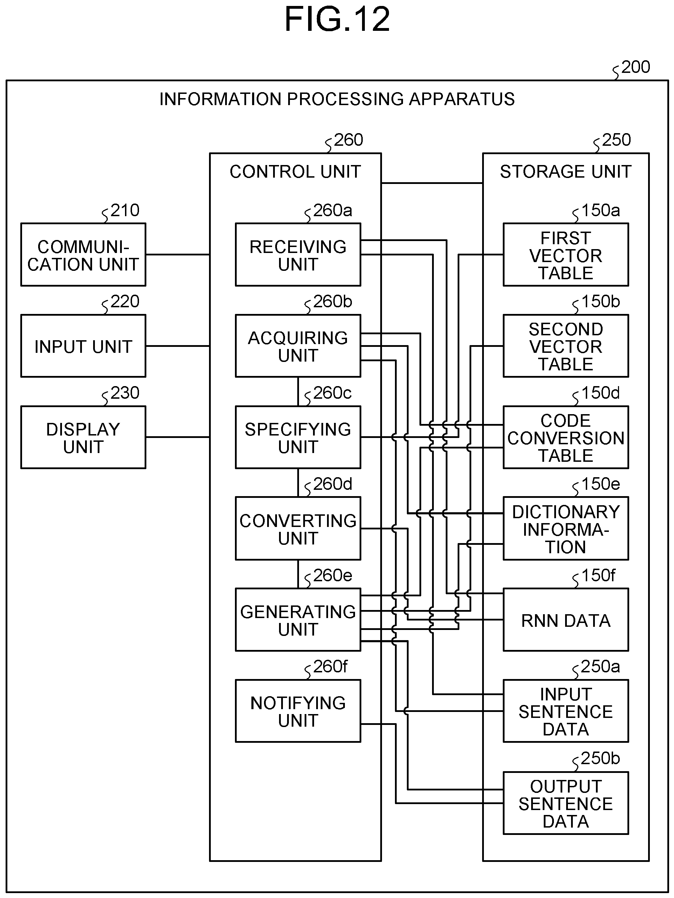

FIG. 12 is a functional block diagram illustrating a configuration of the information processing apparatus according to the second embodiment. As illustrated in FIG. 12, an information processing apparatus 200 includes a communication unit 210, an input unit 220, a display unit 230, a storage unit 250, and a control unit 260.

The communication unit 210 is a processing unit that performs data communication with an external device or the information processing apparatus 100 described in the first embodiment via a network. The communication unit 210 is an example of a communication device. For example, the communication unit 210 may also receive the learned RNN data 150f via the network. Furthermore, the communication unit 210 may also receive input sentence data 250a corresponding to the translation target via the network.

The input unit 220 is an input device for inputting various kinds of information to the information processing apparatus 200. For example, the input unit 220 corresponds to a keyboard, a mouse, a touch panel, or the like.

The display unit 230 is a display device that displays various kinds of information output from the control unit 260. For example, the display unit 230 corresponds to a liquid crystal display, a touch panel, or the like.

The storage unit 250 includes the first vector table 150a, the second vector table 150b, the code conversion table 150d, the dictionary information 150e, the RNN data 150f, the input sentence data 250a, and an output sentence data 250b. The storage unit 250 is a semiconductor memory device, such as a RAM, a ROM, or a flash memory, or a storage device, such as an HDD.

The first vector table 150a is a table that associates the static codes of the first language with the first vectors. A description of the data structure of the first vector table 150a is the same as the description of the data structure of the first vector table 150a illustrated in FIG. 4.

The second vector table 150b is a table that associates the static codes of the second language with the second vectors. A description of the data structure of the second vector table 150b is the same as the description of the data structure of the second vector table 150b illustrated in FIG. 5.

The code conversion table 150d is a table that associates combinations of words and vocabularies of the words with the compression codes. A description of the data structure of the code conversion table 150d is the same as the description of the data structure of the code conversion table 150d illustrated in FIG. 7.

The dictionary information 150e is a table that associates the compression codes with the static codes. A description of the data structure of the dictionary information 150e is the same as the description of the data structure of the dictionary information 150e illustrated in FIG. 8.

The RNN data 150f is a table that holds the parameters and the like that are set in the corresponding intermediate layers in the RNN 60 described with reference to FIGS. 1 and 2. A description of the data structure of the RNN data 150f is the same as that of the data structure of the RNN data 150f with reference to FIG. 9. Furthermore, the parameters of the RNN data 150f are the parameters learned by the information processing apparatus 100 according to the first embodiment.

The input sentence data 250a is data of the input sentence corresponding to the translation target. For example, it is assumed that the input sentence data 250a is "Ringo ha amai." or the like written in the first language.

The output sentence data 250b is data obtained by translating the input sentence data 250a. For example, when the input sentence data is "Ringo ha amai." and the parameters of the RNN data 150f are appropriately learned, the output sentence data is "The apple is sweet".

The control unit 260 includes a receiving unit 260a, an acquiring unit 260b, a specifying unit 260c, a converting unit 260d, a generating unit 260e, and a notifying unit 260f. The control unit 260 can be implemented by a CPU, an MPU, or the like. Furthermore, the control unit 260 may also be implemented by hard-wired logic, such as an ASIC, an FPGA, or the like. Furthermore, it is assumed that the processes performed by the encoder 50, the RNN 60, and the decoder 70 are implemented by the control unit 260.

The receiving unit 260a is a processing unit that stores, when receiving the RNN data 150f from the information processing apparatus 100 via the network, the received RNN data 150f in the storage unit 250. Furthermore, if the RNN data 150f has already been stored in the storage unit 250, the RNN data 150f may also be updated by the latest RNN data 150f.

When the receiving unit 260a receives the input sentence data 250a from an external device via the network, the receiving unit 260a stores the received input sentence data 250a in the storage unit 250.

The acquiring unit 260b is a processing unit that analyzes the input sentence in the input sentence data 250a and that acquires a static code associated with the word of the input sentence. In the following, an example of a process performed by the acquiring unit 260b will be described.

The acquiring unit 260b acquires the input sentence from the input sentence data 250a, performs a lexical analysis on the input sentence, and divides the input sentence into a plurality of words. The acquiring unit 260b selects the divided words, compares the selected words with the table 151a in the code conversion table 150d, and converts the words to compression codes.

Here, when the selected word is a polysemous word, the acquiring unit 260b specifies, from the table 151a, the compression code that is associated with a combination of the selected word and the word meaning and converts the selected word to the specified compression code. When the selected word is not a polysemous word, the acquiring unit 260b specifies, from the table 151a, the compression code associated with the selected word and converts the selected word to the specified compression code.

When the acquiring unit 260b converts the words of the input sentence to the compression codes, the acquiring unit 260b compares the converted compression codes with the table 152a in the dictionary information 150e and specifies the static codes associated with the compression codes. The acquiring unit 260b converts the compression codes to the static codes and outputs the converted static codes to the specifying unit 260c. The static code that is output to the specifying unit 260c by the acquiring unit 260b is referred to as a "first static code".

The specifying unit 260c compares the first static code with the first vector table 150a and specifies the first vector associated with the first static code. The specifying unit 260c outputs the combinations of each of the first vectors associated with the corresponding words included in the input sentence to the converting unit 260d.

The converting unit 260d uses each of the parameters of the intermediate layers 61-1 to 63-n registered in the RNN data 150f and inputs each of the first vectors to the corresponding intermediate layers 61-1 to 61-n in the RNN 60. The converting unit 260d converts each of the first vectors to the corresponding second vectors by acquiring each of the second vectors output from the corresponding intermediate layers 63-1 to 63-n in the RNN 60. The converting unit 260d outputs each of the converted second vectors to the generating unit 260e.

The generating unit 260e is a processing unit that generates the output sentence data 250b by using each of the second vectors acquired from the converting unit 260d. In the following, an example of a process performed by the generating unit 260e will be described.

The generating unit 260e compares each of the second vectors with the second vector table 150b and specifies each of the second static codes associated with the corresponding second vectors. The generating unit 260e compares each of the second static codes with the table 152b in the dictionary information 150e and specifies each of the compression codes associated with the corresponding second static codes.

When the generating unit 260e specifies each of the compression codes, the generating unit 260e compares the specified compression codes with the table 151b in the code conversion table 150d and specifies the words written in the second language associated with the corresponding compression codes. The generating unit 260e generates the output sentence data 250b by arranging the specified words. The generating unit 260e stores the generated output sentence data 250b in the storage unit 250.

The notifying unit 260f is a processing unit that notifies an external device functioning as the transmission source of the input sentence data 250a of the output sentence data 250b stored in the storage unit 250.

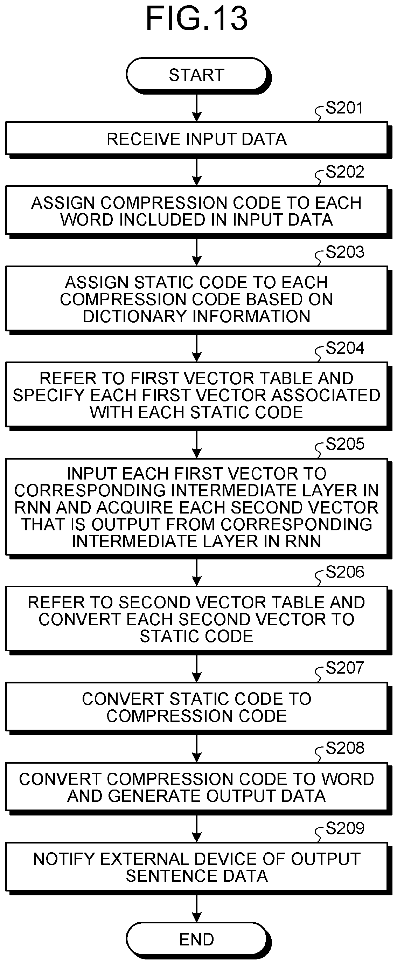

In the following, an example of the flow of a process performed by the information processing apparatus 200 according to the second embodiment will be described. FIG. 13 is a flowchart illustrating the flow of the process performed by the information processing apparatus according to the second embodiment. As illustrated in FIG. 13, the receiving unit 260a in the information processing apparatus 200 receives the input sentence data 250a (Step S201).

**EP 3 825 896 A1**

The acquiring unit 260b in the information processing apparatus 200 assigns the compression code to each of the words included in the input sentence data 250a (Step S202). The acquiring unit 260b assigns a static code to each of the compression codes based on the dictionary information 150e (Step S203).

The specifying unit 260c in the information processing apparatus 200 refers to the first vector table 150a and specifies each of the first vectors associated with the corresponding static codes (Step S204). The converting unit 260d in the information processing apparatus 200 inputs each of the first vectors to the corresponding intermediate layers in the RNN 60 and acquires the second vectors that are output from the corresponding intermediate layers in the RNN 60 (Step S205).

The generating unit 260e in the information processing apparatus 200 refers to the second vector table 150b and converts each of the second vectors to static codes (Step S206). The generating unit 260e converts the static codes to compression codes (Step S207).

The generating unit 260e converts the compression codes to words and generates the output sentence data 250b (Step S208). The notifying unit 260f in the information processing apparatus 200 notifies the external device of the output sentence data 250b (Step S209).

In the following, the effects of the information processing apparatus 200 according to the second embodiment will be described. The information processing apparatus 200 converts the words included in the input sentence data 250a to the first vectors by using the compression codes and the static codes that uniquely identify the words and the word meanings of the words. The information processing apparatus 200 inputs the first vectors to the RNN 60 and generates the output sentence data 250b, whereby, even when a polysemous word is included in the input sentence data 250a, the information processing apparatus 200 can generate the output sentence data 250b corresponding to a translated sentence with accuracy.

Incidentally, in the first and the second embodiments described above, the description has been given with the assumption that the first language is the Japanese language and the second language is the English language; however, the languages are not limited to these. For example, other languages, such as the Chinese language, the Korean language, the French language, the Hindi language, the Spanish language, the Arabic language, the Bengali language, the Portuguese language, and the like, may also be used. Furthermore, the relationship between the first language and the second language may also have a relationship between a standard language and a dialect of the Japanese language.

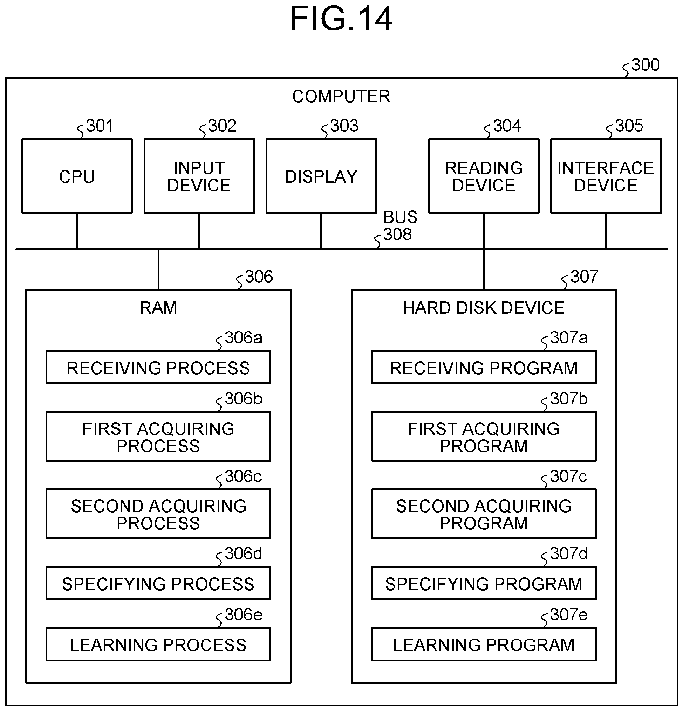

In the following, an example of a hardware configuration of a computer that implements the same function as that of the information processing apparatus 100 described above in the first embodiment will be described. FIG. 14 is a diagram illustrating an example of a hardware configuration of a computer that implements the same function as that of the information processing apparatus according to the first embodiment.

As illustrated in FIG. 14, a computer 300 includes a CPU 301 that executes various kinds of arithmetic processing, an input device 302 that receives an input of data from a user, and a display 303. Furthermore, the computer 300 includes a reading device 304 the reads that reads programs or the like from a storage medium and an interface device 305 that sends and receives data to and from an external device via a wired or wireless network. The computer 300 includes a RAM 306 that temporarily stores therein various kinds of information and a hard disk device 307. Each of the devices 301 to 307 is connected to a bus 308.

The hard disk device 307 includes a receiving program 307a, a first acquiring program 307b, a second acquiring program 307c, a specifying program 307d, and a learning program 307e. The CPU 301 reads the receiving program 307a, the first acquiring program 307b, the second acquiring program 307c, the specifying program 307d, and the learning program 307e and loads the programs in the RAM 306.

The receiving program 307a functions as a receiving process 306a. The first acquiring program 307b functions as a first acquiring process 306b. The second acquiring program 307c functions as a second acquiring process 306c. The specifying program 307d functions as a specifying process 306d. The learning program 307e functions as a learning process 306e.

The process of the receiving process 306a corresponds to the process of the receiving unit 160a. The process of the first acquiring process 306b corresponds to the process of the first acquiring unit 160b. The process of the second acquiring process 306c corresponds to the process of the second acquiring unit 160c. The process of the specifying process 306d corresponds to the process of the specifying unit 160d. The process of the learning process 306e corresponds to the process of the learning unit 160e.

Furthermore, each of the programs 307a to 307e does not need to be stored in the hard disk device 307 in advance from the beginning. For example, each of the programs is stored in a "portable physical medium", such as a flexible disk (FD), a CD-ROM, a DVD disk, a magneto-optic disk, an IC CARD, that is to be inserted into the computer 300. Then, the computer 300 may also read each of the programs 307a to 307e from the portable physical medium and execute the programs.

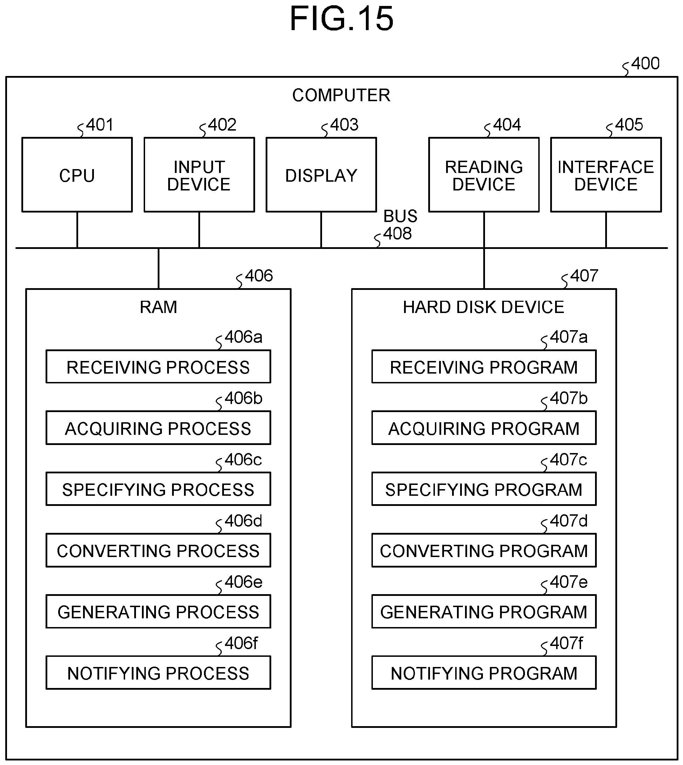

Subsequently, an example of a hardware configuration of a computer that implements the same function as that of the information processing apparatus 200 described above in the second embodiment will be described. FIG. 15 is a diagram illustrating an example of a hardware configuration of a computer that implements the same function as that of the information processing apparatus according to the second embodiment.

As illustrated in FIG. 15, a computer 400 includes a CPU 401 that executes various kinds of arithmetic processing, an input device 402 that receives an input of data from a user, and a display 403. Furthermore, the computer 400 includes a reading device 404 that reads programs of the like from a storage medium and an interface device 405 that sends and receives data to and from an external device, the information processing apparatus 100, or the like via a wired or wireless network. The computer 400 includes a RAM 406 that temporarily stores therein various kinds of information and a hard disk device 407. Each of the devices 401 to 407 is connected to a bus 408.

The hard disk device 407 includes a receiving program 407a, an acquiring program 407b, a specifying program 407c, a converting program 407d, a generating program 407e, and a notifying program 407f. The CPU 401 reads the receiving program 407a, the acquiring program 407b, the specifying program 407c, the converting program 407d, the generating program 407e, and the notifying program 407f and loads the programs in the RAM 406.

The receiving program 407a functions as a receiving process 406a. The acquiring program 407b functions as an acquiring process 406b. The specifying program 407c functions as a specifying process 406c. The converting program 407d functions as a converting process 406d. The generating program 407e functions as a generating process 406e. The notifying program 407f functions as a notifying process 406f.

The process of the receiving process 406a corresponds to the process of the receiving unit 260a. The process of the acquiring process 406b corresponds to the process of the acquiring unit 260b. The process of the specifying process 406c corresponds to the process of the specifying unit 260c. The process of the converting process 406d corresponds to the process of the converting unit 260d. The process of the generating process 406e corresponds to the process of the generating unit 260e. The process of the notifying process 406f corresponds to the process of the notifying unit 260f.

Furthermore, each of the programs 407a to 407f does not need to be stored in the hard disk device 307 in advance from the beginning. For example, each of the programs is stored in a "portable physical medium", such as a flexible disk (FD), a CD-ROM, a DVD disk, a magneto-optic disk, an IC CARD, that is to be inserted into the computer 400. Then, the computer 300 may also read each of the programs 407a to 407f from the portable physical medium and execute the programs.

[Explanation of Reference]

| | |
|---|---|
| 100, 200 | information processing apparatus |
| 110, 210 | communication unit |
| 120, 220 | input unit |
| 130, 230 | display unit |
| 150, 250 | storage unit |
| 150a | first vector table |
| 150b | second vector table |
| 150c | teacher data table |
| 150d | code conversion table |
| 150e | dictionary information |
| 150f | RNN data |
| 160, 260 | control unit |
| 160a, 260a | receiving unit |
| 160b | first acquiring unit |
| 160c | second acquiring unit |
| 160d, 260c | specifying unit |
| 160e | learning unit |
| 260b | acquiring unit |
| 260d | converting unit |
| 260f | notifying unit |

**Claims**

**1.** A learning method that causes a computer to execute a process comprising:

receiving first text information and second text information;

acquiring, by analyzing the received first text information, first word information that identifies a combination of one of words included in the first text information and a word meaning of the one of the words;

acquiring, by analyzing the received second text information, second word information that identifies a combination of one of words included in the second text information and a word meaning of the one of the words;

specifying, by referring to a storage unit in which word meaning vectors associated with corresponding word meanings of words are stored in association with word information that identifies combinations of the words and the word meanings of the words, a first word meaning vector associated with the first word information and a second word meaning vector associated with the second word information; and

learning parameters of a conversion model such that a word meaning vector that is output when the first word meaning vector specified from the first word information on a first word included in the first text information is input to the conversion model approaches the second word meaning vector specified from a second word that indicates a word that is associated with the first word and that is included in the second text information.

2. The learning method according to claim 1, wherein the acquiring the first word information includes acquiring, as the first word information, by analyzing the first text information, regarding a word having a plurality of word meanings out of the words included in the first text information, a code that identifies a combination of the word meaning of the first text information and the word.

3. The learning method according to claim 2, wherein the acquiring the second word information includes acquiring, as the second word information, by analyzing the second text information, regarding a word having a plurality of word meanings out of the words included in the second text information, a code that identifies a combination of the word meaning of the second text information and the word.

4. The learning method according to claim 1, 2, or 3, wherein the first text information is text information written in a first language and the second text information is text information written in a second language that is different from the first language.

5. The learning method according to claim 3, wherein

the acquiring the first word information includes converting the code that identifies the combination of the word meaning of the first text information and the word to a static code, and

the acquiring the second word information includes converting the code that identifies the combination of the word meaning of the second text information and the word to a static code.

6. A translation method that causes a computer to execute a process comprising:

receiving first text information;

acquiring, by analyzing the received first text information, first word information that identifies a combination of one of words included in the first text information and a word meaning of the one of the words;

specifying, by referring to a storage unit in which word meaning vectors associated with corresponding word meanings of words are stored in association with word information that identifies combinations of the words and the word meanings of the words, a first word meaning vector associated with the first word information;

converting the first word meaning vector to a second word meaning vector by inputting the first word meaning vector to a conversion model that has parameters learned by the learning method according to claim 1;

acquiring, by referring to the storage unit, second word information associated with the second word meaning vector; and

generating second text information based on the second word information.

7. A learning program that causes a computer to execute a process comprising:

receiving first text information and second text information;

acquiring, by analyzing the received first text information, first word information that identifies a combination of one of words included in the first text information and a word meaning of the one of the words;

acquiring, by analyzing the received second text information, second word information that identifies a combination of one of words included in the second text information and a word meaning of the one of the words;

specifying, by referring to a storage unit in which word meaning vectors associated with corresponding word meanings of words are stored in association with word information that identifies combinations of the words and the word meanings of the words, a first word meaning vector associated with the first word information and a second word meaning vector associated with the second word information; and

learning parameters of a conversion model such that a word meaning vector that is output when the first word meaning vector specified from the first word information on a first word included in the first text information is input to the conversion model approaches the second word meaning vector specified from a second word that indicates a word that is associated with the first word and that is included in the second text information.

8. The learning program according to claim 7, wherein the acquiring the first word information includes acquiring, as the first word information, by analyzing the first text information, regarding a word having a plurality of word meanings out of the words included in the first text information, a code that identifies a combination of the word meaning of the first text information and the word.

9. The learning program according to claim 8, wherein the acquiring the second word information includes acquiring, as the second word information, by analyzing the second text information, regarding a word having a plurality of word meanings out of the words included in the second text information, a code that identifies a combination of the word meaning of the second text information and the word.

10. The learning program according to claim 7, 8, or 9, wherein the first text information is text information written in a first language and the second text information is text information written in a second language that is different from the first language.

11. The learning program according to claim 9, wherein
the acquiring the first word information includes converting the code that identifies the combination of the word meaning of the first text information and the word to a static code, and
the acquiring the second word information includes converting the code that identifies the combination of the word meaning of the second text information and the word to a static code.

12. A translation program that causes a computer to execute a process comprising:

receiving first text information;
acquiring, by analyzing the received first text information, first word information that identifies a combination of one of words included in the first text information and a word meaning of the one of the words;
specifying, by referring to a storage unit in which word meaning vectors associated with corresponding word meanings of words are stored in association with word information that identifies combinations of the words and the word meanings of the words, a first word meaning vector associated with the first word information;
converting the first word meaning vector to a second word meaning vector by inputting the first word meaning vector to a conversion model that has parameters learned by the learning method according to claim 1;
acquiring, by referring to the storage unit, second word information associated with the second word meaning vector; and
generating second text information based on the second word information.

13. An information processing apparatus comprising:

a receiving unit configured to receive first text information and second text information;
a first acquiring unit configured to acquire, by analyzing the received first text information, first word information that identifies a combination of one of words included in the first text information and a word meaning of the one of the words;
a second acquiring unit configured to acquire, by analyzing the received second text information, second word information that identifies a combination of one of words included in the second text information and a word meaning of the one of the words;
a specifying unit configured to specify, by referring to a storage unit in which word meaning vectors associated with corresponding word meanings of words are stored in association with word information that identifies combinations of the words and the word meanings of the words, a first word meaning vector associated with the first word information and a second word meaning vector associated with the second word information; and
a learning unit configured to learn parameters of a conversion model such that a word meaning vector that is output when the first word meaning vector specified from the first word information on a first word included in the first text information is input to the conversion model approaches the second word meaning vector specified from a second word that indicates a word that is associated with the first word and that is included in the second text information.

**14.** The information processing apparatus according to claim 13, wherein the first acquiring unit is configured to acquire, as the first word information, by analyzing the first text information, regarding a word having a plurality of word meanings out of the words included in the first text information, a code that identifies a combination of the word meaning of the first text information and the word.

**15.** The information processing apparatus according to claim 14, wherein the second acquiring unit is configured to acquire, as the second word information, by analyzing the second text information, regarding a word having a plurality of word meanings out of the words included in the second text information, a code that identifies a combination of the word meaning of the second text information and the word.

**16.** The information processing apparatus according to claim 13, 14, or 15, wherein the first text information is text information written in a first language and the second text information is text information written in a second language that is different from the first language.

**17.** The information processing apparatus according to claim 15, wherein
the first acquiring unit is configured to convert the code that identifies the combination of the word meaning of the first text information and the word to a static code, and
the second acquiring unit is configured to convert the code that identifies the combination of the word meaning of the second text information and the word to a static code.

**18.** An information processing apparatus comprising:

a receiving unit configured to receive first text information;
an acquiring unit configured to acquire, by analyzing the received first text information, first word information that identifies a combination of one of words included in the first text information and a word meaning of the one of the words;
a specifying unit configured to specify, by referring to a storage unit in which word meaning vectors associated with corresponding word meanings of words are stored in association with word information that identifies combinations of the words and the word meanings of the words, a first word meaning vector associated with the first word information;
a converting unit configured to convert the first word meaning vector to a second word meaning vector by inputting the first word meaning vector to a conversion model that has parameters learned by the learning method according to claim 1; and
a generating unit configured to acquire, by referring to the storage unit, second word information associated with the second word meaning vector and generate second text information based on the second word information.

# FIG.1

# FIG.2

# FIG.3

100

## INFORMATION PROCESSING APPARATUS

160
### CONTROL UNIT

150
### STORAGE UNIT

110
COMMUNI-
CATION UNIT

120
INPUT UNIT

130
DISPLAY
UNIT

160a
RECEIVING
UNIT

160b
FIRST
ACQUIRING
UNIT

160c
SECOND
ACQUIRING
UNIT

160d
SPECIFYING
UNIT

160e
LEARNING
UNIT

150a
FIRST
VECTOR
TABLE

150b
SECOND
VECTOR
TABLE

150c
TEACHER
DATA TABLE

150d
CODE
CONVERSION
TABLE

150e
DICTIONARY
INFORMA-
TION

150f
RNN DATA

# FIG.4

150a

| STATIC CODE IN FIRST LANGUAGE | FIRST VECTOR |
|---|---|
| ... | ... |
| 6002h (AMAI (1)) | Ve1-1 |
| 6003h (AMAI (2)) | Ve1-2 |
| ... | ... |

# FIG.5

150b

| STATIC CODE IN SECOND LANGUAGE | SECOND VECTOR |
|---|---|
| ... | ... |
| 6073h (sweet) | Ve2-1 |
| ... | ... |
| 6077h (shallow) | Ve2-2 |
| ... | ... |

# FIG.6

150c

| INPUT SENTENCE | OUTPUT SENTENCE |
|---|---|
| RINGO HA AMAI. | The apple is sweet. |
| KIMI NO KANGAE HA AMAI. | Your idea is sharrow. |
| KONO BUN WO HONYAKU SHITE KUDASAI. | Please translate this sentence. |
| ... | ... |

# FIG.7

150d

| 151a | | 151b | |
|---|---|---|---|
| WORD IN FIRST LANGUAGE | COMPRESSION CODE | WORD IN SECOND LANGUAGE | COMPRESSION CODE |
| ... | ... | ... | ... |
| AMAI (1) | C101 | sweet | C201 |
| AMAI (2) | C102 | ... | ... |
| ... | ... | shallow | C202 |
| | | ... | ... |

# FIG.8

150e

152a

| COMPRESSION CODE | STATIC CODE |
|---|---|
| ... | ... |
| C101 | 6002h |
| C102 | 6003h |
| ... | ... |

152b

| COMPRESSION CODE | STATIC CODE |
|---|---|
| ... | ... |
| C201 | 6073h |
| ... | ... |
| C202 | 6077h |
| ... | ... |

# FIG.9

150d

| RNN IDENTIFICAION INFORMATION | PARAMETER |
|---|---|
| 61-1 | PARAMETER SET IN INTERMEDIATE LAYER 61-1 |
| 61-2 | PARAMETER SET IN INTERMEDIATE LAYER 61-2 |
| 61-3 | PARAMETER SET IN INTERMEDIATE LAYER 61-3 |
| ... | ... |
| 61-n | PARAMETER SET IN INTERMEDIATE LAYER 61-n |
| 63-1 | PARAMETER SET IN INTERMEDIATE LAYER 63-1 |
| 63-2 | PARAMETER SET IN INTERMEDIATE LAYER 63-2 |
| ... | ... |
| 63-n | PARAMETER SET IN INTERMEDIATE LAYER 63-n |

# FIG.10

FIG.11

```
                    ┌──────────────┐
                    │    START     │
                    └──────┬───────┘
                           │          S101
              ┌────────────▼────────────────┐
              │  RECEIVE TEACHER DATA TABLE  │
              └────────────┬────────────────┘
                           │          S102
              ┌────────────▼────────────────┐
              │   ACQUIRE TEACHER DATA FROM  │
              │     TEACHER DATA TABLE       │
              └────────────┬────────────────┘
                           │          S103
              ┌────────────▼────────────────┐
              │  ASSIGN COMPRESSION CODE TO  │
              │  EACH WORD INCLUDED IN INPUT │
              │          SENTENCE            │
              └────────────┬────────────────┘
                           │          S104
              ┌────────────▼────────────────┐
              │   ASSIGN STATIC CODE TO EACH │
              │       COMPRESSION CODE       │
              └────────────┬────────────────┘
                           │          S105
              ┌────────────▼────────────────┐
              │  SPECIFY EACH FIRST VECTOR   │
              │ ASSOCIATED WITH CORRESPONDING│
              │   STATIC CODE BASED ON FIRST │
              │         VECTOR TABLE         │
              └────────────┬────────────────┘
                           │          S106
              ┌────────────▼────────────────┐
              │  ASSIGN COMPRESSION CODE TO  │
              │ EACH WORD INCLUDED IN OUTPUT │
              │          SENTENCE            │
              └────────────┬────────────────┘
                           │          S107
              ┌────────────▼────────────────┐
              │   ASSIGN STATIC CODE TO EACH │
              │       COMPRESSION CODE       │
              └────────────┬────────────────┘
                           │          S108
              ┌────────────▼────────────────┐
              │   SPECIFY EACH SECOND VECTOR │
              │ ASSOCIATED WITH CORRESPONDING│
              │  STATIC CODE BASED ON SECOND │
              │         VECTOR TABLE         │
              └────────────┬────────────────┘
                           │          S109
              ┌────────────▼────────────────┐
              │  INPUT EACH FIRST VECTOR TO  │
              │ CORRESPONDING INTERMEDIATE   │
              │ LAYER IN RNN AND ADJUST      │
              │ PARAMETER SUCH THAT EACH     │
              │ VECTOR OUTPUT FROM           │
              │ CORRESPONDING INTERMEDIATE   │
              │ LAYER IN RNN APPROACHES      │
              │ CORRESPONDING SECOND VECTOR  │
              └────────────┬────────────────┘
                           │          S110
                        ◇──▼──◇                 YES
              ◇ CONTINUE LEARNING? ◇──────────────┐
                        ◇──┬──◇                    │   S111
                           │ NO        ┌───────────▼──────────┐
                    ┌──────▼───────┐   │  ACQUIRE NEW TEACHER  │
                    │     END      │   │  DATA FROM TEACHER    │
                    └──────────────┘   │      DATA TABLE       │
                                       └──────────────────────┘
```

# FIG.12

INFORMATION PROCESSING APPARATUS 〜200

CONTROL UNIT 〜260

STORAGE UNIT 〜250

COMMUNI-CATION UNIT 〜210

INPUT UNIT 〜220

DISPLAY UNIT 〜230

RECEIVING UNIT 〜260a

ACQUIRING UNIT 〜260b

SPECIFYING UNIT 〜260c

CONVERTING UNIT 〜260d

GENERATING UNIT 〜260e

NOTIFYING UNIT 〜260f

FIRST VECTOR TABLE 〜150a

SECOND VECTOR TABLE 〜150b

CODE CONVERSION TABLE 〜150d

DICTIONARY INFORMA-TION 〜150e

RNN DATA 〜150f

INPUT SENTENCE DATA 〜250a

OUTPUT SENTENCE DATA 〜250b

# FIG.13

```
                    START

                                    ⌐S201
        RECEIVE INPUT DATA

                                    ⌐S202
    ASSIGN COMPRESSION CODE TO EACH
      WORD INCLUDED IN INPUT DATA

                                    ⌐S203
       ASSIGN STATIC CODE TO EACH
      COMPRESSION CODE BASED ON
         DICTIONARY INFORMATION

                                    ⌐S204
    REFER TO FIRST VECTOR TABLE AND
   SPECIFY EACH FIRST VECTOR ASSOCIATED
         WITH EACH STATIC CODE

                                    ⌐S205
       INPUT EACH FIRST VECTOR TO
   CORRESPONDING INTERMEDIATE LAYER IN
   RNN AND ACQUIRE EACH SECOND VECTOR
    THAT IS OUTPUT FROM CORRESPONDING
       INTERMEDIATE LAYER IN RNN

                                    ⌐S206
    REFER TO SECOND VECTOR TABLE AND
     CONVERT EACH SECOND VECTOR TO
              STATIC CODE

                                    ⌐S207
        CONVERT STATIC CODE TO
           COMPRESSION CODE

                                    ⌐S208
   CONVERT COMPRESSION CODE TO WORD
       AND GENERATE OUTPUT DATA

                                    ⌐S209
   NOTIFY EXTERNAL DEVICE OF OUTPUT
             SENTENCE DATA

                     END
```

# FIG.14

COMPUTER — 300

| 301 | 302 | 303 | 304 | 305 |
|-----|-----|-----|-----|-----|
| CPU | INPUT DEVICE | DISPLAY | READING DEVICE | INTERFACE DEVICE |

BUS 308

RAM — 306

- RECEIVING PROCESS — 306a
- FIRST ACQUIRING PROCESS — 306b
- SECOND ACQUIRING PROCESS — 306c
- SPECIFYING PROCESS — 306d
- LEARNING PROCESS — 306e

HARD DISK DEVICE — 307

- RECEIVING PROGRAM — 307a
- FIRST ACQUIRING PROGRAM — 307b
- SECOND ACQUIRING PROGRAM — 307c
- SPECIFYING PROGRAM — 307d
- LEARNING PROGRAM — 307e

# FIG.15

COMPUTER {400

COMPUTER

| {401<br>CPU | {402<br>INPUT<br>DEVICE | {403<br>DISPLAY | {404<br>READING<br>DEVICE | {405<br>INTERFACE<br>DEVICE |
|---|---|---|---|---|

BUS
{408

{406
RAM

{406a
RECEIVING PROCESS

{406b
ACQUIRING PROCESS

{406c
SPECIFYING PROCESS

{406d
CONVERTING PROCESS

{406e
GENERATING PROCESS

{406f
NOTIFYING PROCESS

{407
HARD DISK DEVICE

{407a
RECEIVING PROGRAM

{407b
ACQUIRING PROGRAM

{407c
SPECIFYING PROGRAM

{407d
CONVERTING PROGRAM

{407e
GENERATING PROGRAM

{407f
NOTIFYING PROGRAM

## INTERNATIONAL SEARCH REPORT

| | International application No. |
|---|---|
| | PCT/JP2018/027173 |

| A. CLASSIFICATION OF SUBJECT MATTER |
|---|
| Int.Cl. G06F17/28(2006.01)i |
| |
| According to International Patent Classification (IPC) or to both national classification and IPC |

| B. FIELDS SEARCHED |
|---|
| Minimum documentation searched (classification system followed by classification symbols) |
| Int.Cl. G06F17/28 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| X | 増田 嵩志, 鶴岡 慶雅, ニューラルネットワーク日英機械翻訳における品詞情報の利用, 言語処理学会第22回年次大会発表論文集 [online] Proceedings of the Twenty-second Annual Meeting of the Association for Natural Language Processing, 29 February 2016, pp. 294-297, non-official translation (MASUDA, Takashi, TSURUOKA, Yoshimasa, "Use of word class information in neural network Japanese-English machine translation") | 1-4, 6-10, 12-16, 18 |
| Y | | 5, 11, 17 |
| Y | JP 2005-174228 A (CANON INC.) 30 June 2005, paragraphs [0066], [0078]-[0079], fig. 11 (Family: none) | 5, 11, 17 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 October 2018 (11.10.2018) | 23 October 2018 (23.10.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013020431 A

- JP 2018026098 A